# EUROPÄISCHE PATENTSCHRIFT

(11) **EP 2 923 119 B1**
(45) Veröffentlichungstag und Bekanntmachung des Hinweises auf die Patenterteilung: **19.07.2017**
(21) Anmeldenummer: 13799244.2
(22) Anmeldetag: 25.11.2013
(51) Int. Cl.: F16H 57/025, F16H 57/033, F16H 57/04, F16H 57/029

(54) **ADAPTERBAUGRUPPE**
COUPLING ADAPTER
ADAPTATEUR DE COUPLAGE

(30) Priorität: 26.11.2012 EP 12194252
(43) Veröffentlichungstag der Anmeldung: 30.09.2015
(73) Patentinhaber: Siemens Aktiengesellschaft, 80333 München (DE)
(72) Erfinder: BOEING, Georg, 72108 Rottenburg (DE); SCHNURR, Wolfgang, 72147 Nehren (DE)
(86) Internationale Anmeldenummer: PCT/EP2013/074536
(87) Internationale Veröffentlichungsnummer: WO 2014/079996

(56) Entgegenhaltungen:
- WO-A1-2004/057732
- DE-A1- 19 637 361

## Beschreibung

Die Erfindung betrifft eine Adapterbaugruppe zur Verbindung einer Getriebeeinheit und einer Motoreinheit, ein Baukastensystem sowie ein Verfahren zur Herstellung einer Adapterbaugruppe.

Um eine Motoreinheit mit einer Getriebeeinheit verbinden zu können, ist häufig, insbesondere im Fall einer Kombination von Motoren und Getrieben unterschiedlicher Hersteller, eine zwischen den beiden Einheiten angeordnete Adapterbaugruppe notwendig, die die jeweiligen Anschlüsse der beiden Einheiten aneinander anpasst und über eine Adapterwelle drehfest miteinander verbindet. Ein solcher Adapter zur Verbindung eines Elektromotors mit einem Getriebe ist aus der DE-A-196 37 361 (SEW-Eurodrive) 26.03.1998 und aus der US-A-5934156 (Phillips Allyn E.) 10.08.1999 bekannt, wobei letzteres Dokument als nächstliegender Stand der Technik angesehen wird.

Dabei ist die Adapterwelle der Adapterbaugruppe in der Regel in eigenen Lagern, vorzugsweise in Wälzlagern, drehbar gelagert. Es ist bekannt, zur Reibungsverminderung in diesen Lagern lebensdauergeschmierte gekapselte Lager, wie z.B. 2Z-Wälzlager, einzusetzen. Die Lebensdauer der Wälzlager ist durch die Lebensdauer des Schmierstoffs begrenzt. Nach Erreichen der maximalen Lebensdauer des Schmierstoffs in den Lagern muss der Schmierstoff bzw. müssen die Lager ersetzt werden, was Wartungskosten und längere Stillstandzeiten, eventuell mit einem sich daraus ergebenden Produktionsausfall, zur Folge hat.

Alternativ ist es bekannt, Nachschmiermöglichkeiten mit Fett vorzusehen. Die Nachschmierung mit Fett ist in der Regel ein manueller Vorgang, welcher in regelmäßigen Abständen zu erfolgen hat. Die Planung, Organisation und Durchführung solcher regelmäßig zu wiederholender manueller Arbeiten zur Schmierung ist mit einem erheblichen Aufwand verbunden. Zudem kann die Zugänglichkeit der Adapterbaugruppe eingeschränkt sein.

Die WO 2004/057732 A1 offenbart eine Adapterbaugruppe, die unter den Wortlaut des Oberbegriffs des Anspruchs 1 fällt.

Es ist die Aufgabe der vorliegenden Erfindung, eine verbesserte Adapterbaugruppe bereitzustellen.

Die Aufgabe wird gelöst durch eine Adapterbaugruppe nach dem unabhängigen Anspruch 1 und einem Verfahren zur Herstellung einer Adapterbaugruppe nach dem unabhängigen Anspruch 10.

Der getriebeseitige Adapter ist zur Verbindung mit einer ersten Drehvorrichtung (engl.: rotational member) geeignet, z.B. zum Anbau an ein Getriebe; der motorseitige Adapter ist zur Verbindung mit einer zweiten Drehvorrichtung (engl.: rotational member) geeignet, z.B. zum Anbau an einen Motor. Es ist dabei möglich, dass der Adapter ein Bauteil, insbesondere einen Montageflansch, aufweist, das an ein Getriebe oder einen Motor montierbar, insbesondere anflanschbar, ist. Insbesondere kann es sich bei diesem Bauteil um eine einstückig gefertigte Baueinheit, z.B. aus Grauguss, handeln, wie ein Motorlagerschild oder eine Kupplungslaterne.

Die Begriffe "Motor" bzw. "Motoreinheit" im Sinne der vorliegenden Beschreibung sind nicht auf einen Motor, insbesondere einen Elektromotor beschränkt, sondern umfassen alle Antriebe und Antriebseinheiten zum Antrieb einer ersten Drehvorrichtung wie eines Getriebes, z.B. hydraulische Antriebe, Riemenscheiben, Kupplungen, etc. Der Begriff "Getriebe" ist analog ebenso breit zu verstehen, d.h. er umfasst alle Drehvorrichtungen, die von einer zweiten Drehvorrichtung wie einem Motor rotatorisch antreibbar sind.

Die Getriebeseite eines Lagers ist diejenige Seite des Lagers, die einem Getriebe zugewandt ist. Der Ausdruck "Motorseite" ist analog zu verstehen.

Die erfindungsgemäße Adapterbaugruppe dient als Verbindungsglied zum Verbinden einer Motorwelle einer Motoreinheit mit einem Getriebe. Die erfindungsgemäße Adapterbaugruppe weist einen allseitig abgedichteten Schmierstoffraum zur Bereitstellung von Schmierstoff auf, wobei der Schmierstoff von dem der Aufnahme von Schmierstoff dienenden Schmierstoffraum zu Reibstellen in dem getriebeseitigen Lager bzw. dem motorseitigen Lager zuführbar ist. Dabei verhindern die die Adapterwelle umgebenden Schmierstoffdichtungen, und ggf. zusätzlich die auf den Innenseiten der Lager angeordneten Deckscheiben, dass der in dem Schmierstoffraum befindliche Schmierstoff aus dem Schmierstoffraum austritt.

Der Erfindung liegt die Idee zugrunde, einen Austausch oder Ersatz des Schmierstoffs in den Lagern der Adapterbaugruppe während des laufenden Betriebs der Adapterbaugruppe zu ermöglichen, indem der in dem Schmierstoffraum befindliche Schmierstoff genutzt wird. Da sich auf diese Weise nicht immer derselbe Schmierstoff in den Lagern befindet, verlängern sich folglich die Lebensdauer des Schmierstoffs und somit die Wartungsintervalle der Adapterbaugruppe. Die erfindungsgemäße Adapterbaugruppe hat somit wesentlich längere Wartungsintervalle als herkömmliche Adapterbaugruppen.

Die Erfindung ermöglicht eine von anderen Schmierstoffquellen unabhängige, in die Adapterbaugruppe integrierte und einfache Nachschmierung der Lager der Adapterbaugruppe durch Schmierstoffe wie Fett, insbesondere Fließfett, oder Öl. Durch die bessere Schmierung verlängert sich die Lebensdauer des Adapters bzw. der Antriebsgruppe. Die vorliegende Erfindung schafft somit eine einfache Möglichkeit, die Lebensdauer der Lager wesentlich zu verlängern und damit Wartungsintervalle zu verlängern, Wartungskosten und Betriebskosten zu verringern.

Die Erfindung nutzt die bestehende Schmierstoffraumgeometrie einer zweiteiligen Adapterbaugruppe, um eine zusätzliche und integrierte Schmiermöglichkeit bereitzustellen. Die erfindungsgemäße Adapterbaugruppe kann ohne oder zumindest ohne wesentliche, aufwändige Modifikationen an seinen konstruktiven Baueinheiten realisiert werden. Es muss lediglich sichergestellt sein, dass Schmierstoff von dem Schmierstoffraum zu den Schmierstellen, d.h. den Lagern, gelangen kann. Dazu werden eventuell vorhandene Deckscheiben entfernt, welche als Abdichtungen auf den zu dem Schmierstoffraum hin orientierten Seitenflächen der Lager angebracht sind.

Vorteilhafte Ausgestaltungen und Weiterbildungen der Erfindung ergeben sich aus den abhängigen Ansprüchen. Dabei kann das erfindungsgemäße Verfahren auch entsprechend den abhängigen Vorrichtungsansprüchen weitergebildet sein, und umgekehrt.

Es ist möglich, dass der Schmierstoffraum zur Aufnahme von Schmierstoff nach außen abgeschlossen ist, d.h., dass für in den Schmierstoffraum eingefüllten Schmierstoff keine Möglichkeit besteht, den Schmierstoffraum über einen anderen Weg als über die Verbindungen zu dem getriebeseitigen Lager und/oder dem motorseitigen Lager zu verlassen. Der Schmierstoff ist somit gegenüber schädlichen Einflüssen wie Staub und Schmutz geschützt. Trotzdem kann Schmierstoff aus dem Schmierstoffraum zu den Lagern gelangen, wo er seine Reibung vermindernde Funktion erfüllt, und umgekehrt; d.h. ein Austausch von Schmierstoff zwischen dem Schmierstoffraum zur Aufnahme von Schmierstoff und den Lagern kann stattfinden.

Gemäß einer bevorzugten Weiterbildung ist der Schmierstoffraum durch einen Ring, welcher sich zwischen dem getriebeseitigen Lager und dem motorseitigen Lager erstreckt, von einem radial weiter außen liegenden Hohlraum getrennt. Somit weist der zur Aufnahme von Schmierstoff vorgesehene Schmierstoffraum eine ringförmige Wand auf, welche sich zwischen dem getriebeseitigen Lager und dem motorseitigen Lager erstreckt. Diese Wand bildet eine radiale Begrenzung des Schmierstoffraums, in dem sich der Schmierstoff befindet. Somit kann verhindert werden, dass sich Schmierstoff in radial weiter außen liegende Raumbereiche oder Hohlräume verteilt, in denen der Schmierstoff keinen oder nur einen unwesentlichen Beitrag zur Nachschmierung leisten kann. Durch die den Schmierstoffraum abschließende Ringwand kann die benötigte Menge des in den Schmierstoffraum einzufüllenden Schmierstoffs verringert werden, da die Verteilung des Schmierstoffs im Wesentlichen auf die Umgebung der Lager begrenzt wird.

Gemäß einer bevorzugten Ausgestaltung ist der Ring, d.h. die ringförmige Wand, durch eine Auskragung des motorseitigen und/oder getriebeseitigen Adapters ausgebildet. Durch diese Auskragung kann eine axiale Abstützung des getriebeseitigen Lagers erfolgen, so dass das getriebeseitige Lager als ein Festlager ausgebildet ist. Eine Abdichtung eines Spaltes zwischen der Auskragung und dem getriebeseitigen Adapter gegen ein Hindurchtreten von Schmierstoff, d.h. gegen ein unerwünschtes Entweichen des Schmierstoffs aus dem Schmierstoffraum, kann durch eine geeignete Dichtung erfolgen, z.B. einen O-Ring. Es ist möglich, dass die Auskragung einstückig mit dem motorseitigen Adapter ausgebildet ist.

Es ist auch möglich, dass die ringförmige Wand durch einen Zwischenring ausgebildet ist, der zwischen die Lager eingesetzt ist. Der Zwischenring kann zur gegenseitigen axialen Abstützung der Lager dienen, wobei das getriebeseitige Lager vorzugsweise als ein Festlager ausgebildet ist. Eine Abdichtung von Spalten zwischen dem Zwischenring und den Adaptern gegen eine Passage von Schmierstoff, d.h. gegen ein unerwünschtes Entweichen des Schmierstoffs aus dem Schmierstoffraum, kann durch geeignete Dichtungen erfolgen, z.B. mittels O-Ringe.

Gemäß einer bevorzugten Ausgestaltung sind die die Adapterwelle umgebenden Schmierstoffdichtungen jeweils als ein Wellendichtring, insbesondere ein Radial-Wellendichtring mit Dichtlippe, ausgebildet. Dieser kann unmittelbar am Adapter anliegen oder radial innerhalb eines Ausgleichsrings, welcher seinerseits am Adapter anliegt, eingebaut sein. Erfindungsgemäß umfasst die Adapterbaugruppe mindestens einen Kanal, durch welchen Schmierstoff von der Umgebung der Adapterbaugruppe dem Schmierstoffraum zuführbar ist und/oder durch welchen Schmierstoff von dem Schmierstoffraum entnehmbar ist. Dieser Kanal kann daher auch als ein Schmierstoffversorgungskanal bezeichnet werden. Mit "Umgebung der Adapterbaugruppe" wird jeder die Adapterbaugruppe umgebende Schmierstoffraum bezeichnet. Der Kanal bietet somit eine einfache Möglichkeit, von der Umgebung der Adapterbaugruppe, d.h. von außen, Schmierstoff den innerhalb der Adapterbaugruppe angeordneten Lagern zuzuführen, ohne dass die Adapterbaugruppe geöffnet werden muss.

Es ist erfindungsgemäß vorgesehen, dass der mindestens eine Kanal ausschließlich durch den motorseitigen Adapter verläuft, d.h. nur in einem einzigen Bauteil der Adapterbaugruppe angeordnet ist. Somit kann für den getriebeseitigen Adapter ein Standard-Bauteil verwendet werden, während lediglich der motorseitige Adapter für die Anwendung in der Adapterbaugruppe mit einem Kanal versehen werden muss. Dies vereinfacht die Herstellung der Adapterbaugruppe und fördert die Verwendung von standardisierten, unveränderten Bauteilen.

Es ist möglich, dass ein Ende des mindestens einen Kanals am motorseitigen Lager endet. Falls der mindestens eine Kanal durch den motorseitigen Adapter verläuft, ist es vorteilhaft, dass das wellenseitige Ende des Kanals innerhalb des motorseitigen Lagers endet. Somit kann für den getriebeseitigen Adapter ein Standard-Bauteil verwendet werden, während lediglich der motorseitige Adapter für die Anwendung in der Adapterbaugruppe mit einem Kanal versehen werden muss.

Gemäß einer bevorzugten Ausgestaltung umfasst die Adapterbaugruppe, vorzugsweise der motorseitige Adapter, mindestens zwei Kanäle, wobei ein erster Kanal der mindestens zwei Kanäle ein Einlasskanal zur Zuführung von Schmierstoff zu dem Schmierstoffraum ist und ein zweiter Kanal der mindestens zwei Kanäle ein Ablasskanal zur Entnahme von Schmierstoff aus dem Schmierstoffraum ist. Durch die kombinierte Anordnung eines Einlasskanals und eines Ablasskanals in der Adapterbaugruppe ist ein einfacher Austausch des Schmierstoffs in dem Schmierstoffraum möglich. Dabei erfolgt eine Einstellung eines definierten Ölstands im Schmierstoffraum, indem bei vorzugsweise mittels eines Verschlussstopfens verschlossenem Ablasskanal eine vorgegebene Ölmenge durch den Einlasskanal eingefüllt wird. Zum Ölwechsel wird verbrauchtes Öl durch den Ablasskanal aus dem Schmierstoffraum abgelassen und frisches Öl durch den Einlasskanal in den Schmierstoffraum eingefüllt, wie bei einem Ölwechsel bei einem Automobil.

Es ist möglich, dass die Adapterbaugruppe, vorzugsweise der motorseitige Adapter, mindestens drei Kanäle aufweist. Ein erster Kanal der mindestens drei Kanäle dient als ein Einlasskanal zur Zuführung von Schmierstoff zu dem Schmierstoffraum. Ein zweiter Kanal der mindestens drei Kanäle dient als ein Ablasskanal zur Entnahme von Schmierstoff aus dem Schmierstoffraum. Ein dritter Kanal der mindestens drei Kanäle dient als ein Einstellkanal zum Einstellen eines definierten Ölstands im Schmierstoffraum. Dabei erfolgt eine Einstellung eines definierten Ölstands in der Adapterbaugruppe, indem überschüssiges Öl durch mindestens einen Einstellkanal aus dem Schmierstoffraum abgeführt wird. Dabei ist der mindestens eine Einstellkanal so angeordnet, dass im Schmierstoffraum stets eine vorgegebene Ölmenge verbleibt, d.h. ein definierter Ölstand sichergestellt ist. Dabei ist es möglich, dass die Mündung des mindestens einen Einstellkanals im Schmierstoffraum so hoch liegt, dass der Ölpegel ungefähr in Höhe der Unterkante der Adapterwelle liegt.

Im Fall, dass die Adapterbaugruppe die vorgenannten mindestens drei Kanäle aufweist, kann ein Ölwechsel erfolgen, indem verbrauchtes Öl durch den Ablasskanal aus dem Schmierstoffraum abgelassen und frisches Öl durch den Einlasskanal in den Schmierstoffraum eingefüllt wird, wie bei einem Ölwechsel bei einem Automobil. Während des Betriebs der Adapterbaugruppe kann ein ständiger Ölaustausch erfolgen, indem bei vorzugsweise mittels eines Verschlussstopfens verschlossenem Ablasskanal frisches Öl durch den Einlasskanal in den Schmierstoffraum geleitet wird; dabei wird überschüssiges Öl, d.h. über den definierten Ölstand hinaus eingeleitetes Öl, durch den mindestens einen Einstellkanal aus dem Schmierstoffraum abgeführt.

Über den Einstellkanal kann Schmierstoff aus dem Schmierstoffraum in die Getriebeeinheit abgeleitet werden. Kombiniert man diese Ableitung von Schmierstoff über den Einstellkanal mit einer Zuleitung von Schmierstoff, vorzugsweise über einen Einlasskanal, so ist eine Umlaufschmierung realisierbar, die vorzugsweise in einen Schmierstoffversorgungskreislauf der Getriebeeinheit integrierbar ist. Der Begriff Umlaufschmierung bezeichnet einen Schmierstoffkreislauf, bestehend aus einem Reservoir, z.B. einer Ölwanne oder einem Ölsumpf in der Getriebeeinheit, einer Zuführung von dem Reservoir zur Reibstelle, z.B. durch den Einlasskanal, und einer Rückführung in das Reservoir, z.B. durch den Einstellkanal. Es kann zusätzlich eine Schmierstoffaufbereitung bzw. - prozessierung, z.B. ein Ölfilter oder eine Ölkühlvorrichtung, in den Schmierstoffkreislauf integriert sein. Bei einer Umlaufschmierung kann meist mit geringeren Ölmengen im System gearbeitet werden als bei einer getrennten Schmierung von Getriebe und Adapterbaugruppe. Eine Umlaufschmierung kann in vorteilhafter Weise mit Schmieröl realisiert werden.

Es ist möglich, dass die Adapterbaugruppe ein Adapter für IEC-, NEMA- und Servo-Motoren ist, d.h. den Anbau von IEC-, NEMA- und Servo-Motoren ermöglicht (IEC = International Electrotechnical Commission; NEMA = National Electrical Manufacturers Association). Dabei kann die Adapterbaugruppe so gestaltet sein, dass im motorseitigen Adapter verschiedene Kupplungsvarianten wie elastische Kupplung, drehsteife Kupplung oder Rutschkupplung, und eine Rücklaufsperre integriert werden können. Der motorseitige Adapter kann aber auch nur für die Aufnahme der Lagerstelle der Adapterwelle ausgeführt sein. Diese Variante hat die kürzeste Baulänge und ist die preiswerteste Ausführung.

Es ist auch möglich, dass die Adapterbaugruppe den Antrieb über ein freies Wellenende ermöglicht. Dabei ist der motorseitige Adapter so ausgeführt, dass er eine Lagerstelle der Adapterwelle umfasst. Mit dieser Ausführung kann das Drehmoment mit einer Kupplung oder Riemenscheibe, welche auf dem freien Wellenende angebracht ist, in ein Getriebe eingeleitet werden.

Eine bevorzugte Weiterbildung der Erfindung ist eine Antriebsgruppe, umfassend einen Adapterbaugruppe in einer der oben angeführten Ausgestaltungen und eine Getriebeeinheit und/oder eine Motoreinheit, die mit der Adapterbaugruppe verbunden ist bzw. sind.

Eine weitere bevorzugte Weiterbildung der Erfindung ist ein Baukasten-System zum Ausbilden einer Adapterbaugruppe nach einem der Ansprüche 1 bis 9, umfassend mehrere, zum Verbinden mit unterschiedlichen Getriebeeinheiten geeignete, getriebeseitige Adapter mit je einem getriebeseitigen Lager, mehrere jeweils mit mindestens einem der getriebeseitigen Adapter verbindbare, zum Verbinden mit unterschiedlichen Motoreinheiten geeignete, motorseitige Adapter mit je einem motorseitigen Lager, und Adapterwellen zur jeweiligen drehbaren Lagerung in den Lagern.

Die unterschiedlichen Getriebeeinheiten können Getriebe unterschiedlicher Baugrößen umfassen. Die unterschiedlichen Motoreinheiten können Motoren unterschiedlicher Baugrößen umfassen.

Das erfindungsgemäße Adapterbaugruppe-Baukastensystem ermöglicht eine Vielzahl unterschiedlicher Adaptervarianten, welche alle durch eine Ausbildung eines Schmierstoffraums im Inneren der Adapterbaugruppe eine zuverlässige Schmierstoffversorgung der zur Lagerung der Adapterwelle dienenden Wälzlager sicher stellen. Dadurch wird eine wesentliche Verbesserung gegenüber herkömmlichen Adaptersystemen erreicht, bei denen eine Ausbildung eines Schmierstoffraums zur Aufnahme von Schmierstoff in allen Adaptervarianten des Baukastensystems nicht möglich ist. Im Rahmen des erfindungsgemäßen Adapterbaugruppensystems kann ein motorseitiger Adapter einer Baugröße mit unterschiedlichen getriebeseitigen Adaptern bzw. den entsprechenden Getrieben kombiniert werden. Dies wird u.a. dadurch erzielt, dass der motorseitige Adapter einer Baugröße und die unterschiedlichen getriebeseitigen Adapter eine gemeinsame Schnittstelle aufweisen. Dabei ist die motorseitige Schnittstelle des motorseitigen Adapters an die unterschiedlichen Motoren (unterschiedliche Motortypen und innerhalb jedes Motortyps unterschiedliche Baugrößen) und die getriebeseitige Schnittstelle des getriebeseitigen Adapters an die unterschiedlichen Getriebe (unterschiedliche Getriebetypen und innerhalb jedes Getriebetyps unterschiedliche Baugrößen) angepasst, die zueinander gewandten Schnittstellen je eines motorseitigen und eines entsprechenden getriebeseitigen Adapters dagegen gleich (= gemeinsame Schnittstelle).

Stellt man eine bestimmte Anzahl von motorseitigen Adaptern für unterschiedliche Motortypen und Motorbaugrößen bereit, die jeweils über eine gemeinsame Schnittstelle mit mehreren unterschiedlichen getriebeseitigen Adaptern kombinierbar sind, kann die nötige Zahl von Teilen stark reduziert werden. Durch die erfindungsgemäße Ausgestaltung der Adapterbaugruppe und durch das erfindungsgemäße Adapterbaugruppensystem können somit die Kombinationsmöglichkeiten von Motoren und Getrieben insbesondere bei reduzierter Teilezahl erhöht werden. Bei geringer Lagerhaltung sind somit viele Kombinationen von Motoren und Getrieben möglich.

Gemäß einer bevorzugten Ausgestaltung umfasst das Verfahren folgenden weiteren Schritt: Ausbilden mindestens eines Kanals, durch welchen Schmierstoff von der Umgebung der Adapterbaugruppe dem Schmierstoffraum zuführbar ist und/oder Ausbilden mindestens eines Kanals, durch welchen Schmierstoff von dem Schmierstoffraum abführbar ist. Dabei kann der mindestens eine Kanal nach dessen Ausbildung durch einen leicht entfernbaren Verschluss wieder verschlossen werden. Auf diese Weise bietet die Adapterbaugruppe zwei unterschiedliche Nutzungsmöglichkeiten: entweder wird die Adapterbaugruppe herkömmlich genutzt, wenn der Verschluss nicht entfernt wird und somit der Kanal ungenutzt bleibt; alternativ kann die Adapterbaugruppe, nachdem der Verschluss, z.B. durch Abziehen, entfernt wurde, über den Kanal nachgeschmiert werden.

Vorzugsweise wird der mindestens eine Kanal in dem motorseitigen Adapter ausgebildet. Dabei ist es von Vorteil, wenn der mindestens eine Kanal ausschließlich in dem motorseitigen Adapter verläuft. Dies erlaubt es, als getriebeseitigen Adapter einen Standard-Adapter zu verwenden, der in keiner Weise für die Anwendung in der Adapterbaugruppe modifiziert zu sein braucht.

Es ist bevorzugt, dass das Ausbilden des mindestens einen Kanals durch ein spanabhebendes Verfahren, insbesondere durch Bohren oder Fräsen, erfolgt.

Die Motorlagerschilder der Motoreinheiten, mit denen eine erfindungsgemäße Adapterbaugruppe verbunden wird, müssen nicht modifiziert werden. Alle für die Option "längere Wartungsintervalle" erforderlichen Eigenschaften werden in das Bauteil "motorseitiger Adapter" eingebracht. Die baulichen Merkmale sind die Einbaumöglichkeit einer die Adapterwelle umgebenden Schmierstoffdichtung zur Abdichtung des Schmierstoffraums, insbesondere in Form eines Wellendichtrings (= WDR), die Gestaltung und die Einbaumöglichkeit eines den Schmierstoffraum radial umschließenden Bauteils, welches sich zwischen dem getriebeseitigen Lager und dem motorseitigen Lager erstreckt, insbesondere in Form einer Auskragung des motorseitigen Adapters oder eines zwischen die Lager eingesetzten Zwischenrings, und ferner die gusstechnische Einbringungsmöglichkeit mindestens eines Schmierstoffkanals mit der damit verbundenen Möglichkeit, diese als Option in das Gussgehäuse nachträglich durch Fertigung einzubringen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigt
- Fig. 1: eine Ansicht einer Adapterbaugruppe, die zwischen einer Getriebeeinheit und einer Motoreinheit angeordnet ist;
- Fig. 2: Schnitte von zwei unterschiedlichen Ausführungsbeispielen einer Adapterbaugruppe in einer ersten, relativ langen Bauart;
- Fig. 3: Schnitte von zwei unterschiedlichen Ausführungsbeispielen einer Adapterbaugruppe, die ähnlich wie die in Fig. 2 dargestellten Ausführungsbeispiele ausgestaltet, aber für längere Wartungsintervalle ausgeführt sind;
- Fig. 4: einen Schnitt einer Adapterbaugruppe in einer zweiten, relativ kurzen Bauart;
- Fig. 5: einen Schnitt einer Adapterbaugruppe, die ähnlich wie das in Fig. 4 dargestellte Ausführungsbeispiel ausgestaltet, aber für längere Wartungsintervalle ausführt ist;
- Fig. 6: einen Schnitt einer Adapterbaugruppe mit einem freien Wellenende;
- Fig. 7: einen Schnitt einer Adapterbaugruppe, die ähnlich wie das in Fig. 6 dargestellte Ausführungsbeispiel ausgestaltet, aber für längere Wartungsintervalle ausgelegt ist;
- Fig. 8: eine teilweise als Schnitt dargestellte Seitenansicht einer Antriebsgruppe, umfassend einen Kupplungsadapter, eine Getriebeeinheit und eine Motoreinheit; und
- Fig. 9: einen quer zur Wellenachse verlaufenden Schnitt IX-IX durch den in Fig. 7 dargestellten motorseitigen Adapter.
Dabei zeigen nur die Figuren 3, 5, 7 und 8 die in den unabhängigen Ansprüchen 1 und 10 genannten Kanäle (6i, 6o).

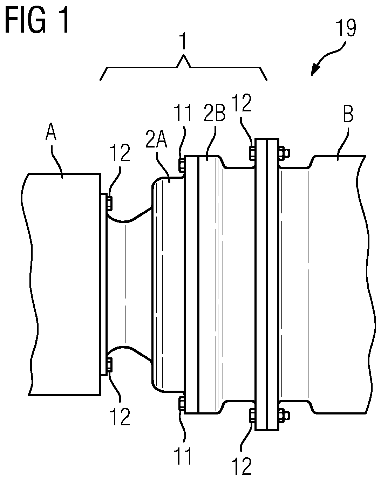

Fig. 1 zeigt eine Ansicht einer Adapterbaugruppe 1, die zwischen einer Getriebeeinheit A und einer Motoreinheit B angeordnet ist. Die Motoreinheit B kann beispielsweise als ein Elektromotor gemäß der IEC-Norm für Drehstrom-Motoren ausgebildet sein, während es sich bei der Getriebeeinheit A beispielsweise um ein individuell gefertigtes Getriebe handelt. Die Adapterbaugruppe 1 weist einen getriebeseitigen Adapter 2A und einen motorseitigen Adapter 2B auf, die mittels Verbindungsschrauben 11 miteinander verbunden sind. Bei dem getriebeseitigen Adapter 2A handelt es sich vorzugsweise um einen Standard-Motorlagerschild. Bei dem motorseitigen Adapter 2B handelt es sich vorzugsweise um eine Standard-Kupplungslaterne. Die Adapter 2A, 2B bestehen vorzugsweise aus Gusseisen, vorzugsweise aus Grauguss. Die Adapterbaugruppe 1 ist mittels Befestigungsschrauben 12 jeweils an der Getriebeeinheit A und der Motoreinheit B montiert.

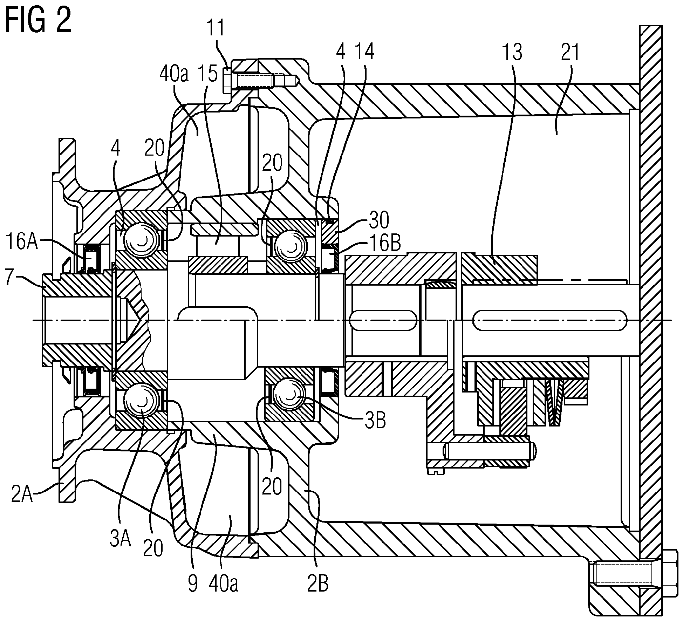

Fig. 2 zeigt Schnitte von zwei unterschiedlichen Ausführungsbeispielen einer Adapterbaugruppe in einer ersten, relativ langen Bauart. Da diese Ausführungsbeispiele für einen Anbau von IEC-, NEMA- oder Servo-Motoren geeignet sind, werden sie hier als "Standardausführung" bezeichnet. Die unterschiedlichen Ausführungsvarianten beziehen sich auf den Einbau von unterschiedlichen Kupplungsvarianten und einer Rücklaufsperre. Ebenso sind unterschiedliche Ausführungen einer motorseitigen Abdichtung mittels Wellendichtringe dargestellt. Für die Standardausführung sind in der Adapterbaugruppe Kugellager in Z-Ausführung eingebaut.

Die Adapterbaugruppe weist einen getriebeseitigen Adapter 2A und einen motorseitigen Adapter 2B auf, welche mithilfe von Verbindungsschrauben 11 fest miteinander verbunden sind. Jeder der beiden Adapter 2A, 2B umfasst jeweils ein Lager 3A, 3B. Das getriebeseitige Lager 3A wird auch als A-Lager, das motorseitige Lager 3B als B-Lager bezeichnet. Die Lager 3A und 3B können, wie in Fig. 2 dargestellt, als Rillenkugellager in Z-Ausführung ausgebildet sein. Das Nachsetzzeichen Z für Wälzlager gibt an, dass das Wälzlager eine nicht schleifende Deckscheibe, in der Regel aus Blech, vorzugsweise Stahlblech, auf einer Seite des Lagers aufweist. Derartige Lager finden Verwendung, wenn die Verschmutzungsgefahr gering und die Reibungsfreiheit ausschlaggebend ist.

Das getriebeseitige Lager 3A ist durch den motorseitigen Adapter 2B axial abgestützt und dadurch als Festlager ausgebildet. Das motorseitige Lager 3B ist als ein Loslager ausgebildet.

Bei dem getriebeseitigen Lager 3A ist die Deckscheibe 20 auf der Motorseite angeordnet, wohingegen die zum Getriebe hin gelegene Seite des getriebeseitigen Lagers 3A offen, d.h. ohne Deckscheibe, ausgebildet ist. Bei dem motorseitigen Lager 3B ist die Deckscheibe 20 auf der Getriebeseite angeordnet, wohingegen die zum Motor hin gelegene Seite des motorseitigen Lagers 3B offen, d.h. ohne Deckscheibe, ausgebildet ist.

In den Lagern 3A, 3B ist eine Adapterwelle 7 drehbar gelagert, welche zur Ausbildung einer drehfesten Verbindung zwischen einer Motoreinheit und einer Getriebeeinheit, die hier nicht dargestellt sind, dient. An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet die Adapterbaugruppe zum Getriebe hin ab. Der motorseitige Wellendichtring 16B dichtet die Adapterbaugruppe zum Kupplungsraum 21 ab. Die Wellendichtringe 16A und 16B sind als Radial-Wellendichtringe mit Dichtlippe ausgebildet. Der motorseitige Wellendichtring 16B kann direkt am motorseitigen Adapter 2B anliegend (untere Hälfte von Fig. 2) oder radial innerhalb eines Ausgleichsrings 30, der entlang seinem äußeren Umfang eine Nut mit einem darin eingelegten O-Ring 14 zur Abdichtung gegenüber dem motorseitigen Adapter 2B aufweist(siehe obere Hälfte von Fig. 2), im motorseitigen Adapter 2B eingebaut sein.

Es wird jeweils der Schmierstoffraum 4 zwischen dem getriebeseitigen Lager 3A und dem getriebeseitigen Wellendichtring 16A bzw. dem motorseitigen Lager 3B und dem motorseitigen Wellendichtring 16B mit einer bestimmten Menge Fett zur Schmierung der Lager 3A, 3B gefüllt.

In der oberen Hälfte von Fig. 2 ist ein Ausführungsbeispiel dargestellt, bei dem radial innerhalb einer Auskragung 9 des motorseitigen Adapters 2B zwischen den A- und B-Lagern 3A, 3B ein Anbau-Freilauf 15 als Rücklaufsperre und auf der Adapterwelle 7 im Bereich des motorseitigen Adapters 2B eine Kupplung 13 angeordnet ist. Dabei kann es sich um eine elastische Kupplung handeln, die lediglich der Übertragung von Drehmomenten dient. Zweck einer solchen Kupplung kann eine Entkopplung von störenden Einflüssen sein, wie axialen und/oder radialen Kräften, Schwingungen oder einem Achsversatz.

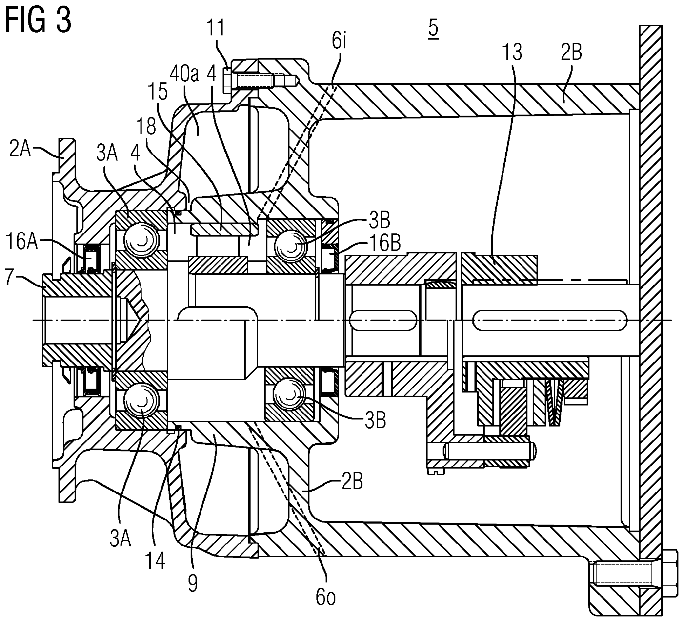

Fig. 3 zeigt in den beiden, durch die waagrechte, punktgestrichelte Linie getrennten Schnitthälften zwei unterschiedliche Ausführungsbeispiele einer Adapterbaugruppe, die ähnlich wie die in Fig. 2 dargestellten Ausführungsbeispiele ausgestaltet, aber für längere Wartungsintervalle ausgeführt sind. Die dargestellten Adapterbaugruppen sind für einen Anbau von IEC-, NEMA- oder Servo-Motoren geeignet. Dargestellt ist der Einbau von unterschiedlichen Kupplungsvarianten 13 und einer Rücklaufsperre 15. Ebenso sind unterschiedliche Ausführungen einer motorseitigen Abdichtung mittels Wellendichtringe 16B dargestellt.

In der Ausführung für längere Wartungsintervalle weist die Adapterbaugruppe Kugellager 3A, 3B in Normalausführung auf, d.h. ohne Deckscheiben. Durch einen Einbau eines O-Ringes 14 an einer innenliegenden ringförmigen Kontaktstelle der Adapter 2A, 2B wird ein geschlossener Schmierstoffraum 4 für die Schmierstoffaufnahme ausgebildet, der durch die Auskragung 9 von einem radial weiter außen liegenden, ringförmigen Hohlraum 40a, in welchem sich kein Schmierstoff befindet, getrennt ist.

In dem motorseitigen Adapter 2B sind Bohrungen 6i und 60 für die Schmierstoffzufuhr in den bzw. den Ablauf aus dem Schmierstoffraum 4 für die Schmierstoffaufnahme eingebracht. Die zuführende Bohrung 6i ist an der obersten Stelle im motorseitigem Adapter 2B angebracht. Die abführende Bohrung 60 ist so am motorseitigem Adapter 2B angebracht, dass immer eine ausreichende Menge Schmieröl für die Wälzlager 3A, 3B vorhanden ist. Durch die Kanäle 6i, 60 ist Schmierstoff von der Umgebung 5 der Adapterbaugruppe dem Schmierstoffraum 4 zuführbar und/oder Schmierstoff von dem Schmierstoffraum 4 entnehmbar.

Da der Schmierstoffraum 4, der sich zwischen den beiden Wellendichtring 16A durchgehend erstreckt, erheblich größer ist als bei dem in Fig. 2 gezeigten Ausführungsbeispiel mit den beiden getrennten Schmierstoffräumen 4, ergeben sich relativ lange Wartungsintervalle.

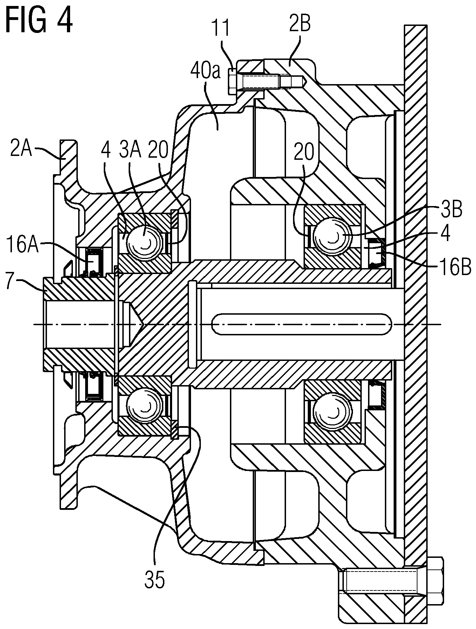

Fig. 4 zeigt einen Schnitt einer Adapterbaugruppe in kurzer Bauweise. Für die Standardausführung sind in der Adapterbaugruppe Kugellager in Z-Ausführung eingebaut. Die Lager 3A, 3B weisen an den zueinander liegenden Seiten jeweils Deckscheiben 20 auf, sind aber auf den jeweils äußeren Seiten offen, d.h. ohne Deckscheibe.

Das getriebeseitige Lager 3A ist durch einen Sicherungsring 35 fixiert und somit als Festlager ausgebildet. Das motorseitige Lager 3B ist ein Loslager.

An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet die Adapterbaugruppe zum Getriebe hin ab. Der motorseitige Wellendichtring 16B dichtet die Adapterbaugruppe zum Motor hin ab.

Es wird jeweils der Schmierstoffraum 4 zwischen dem getriebeseitigen Lager 3A und dem getriebeseitigen Wellendichtring 16A bzw. dem motorseitigen Lager 3B und dem motorseitigen Wellendichtring 16B mit einer bestimmten Menge Fett zur Schmierung der Lager 3A, 3B gefüllt. Zwischen den Lagern 3A, 3B befindet sich rings um die Adapterwelle 7 ein Hohlraum 40a, in dem sich kein Schmierstoff befindet.

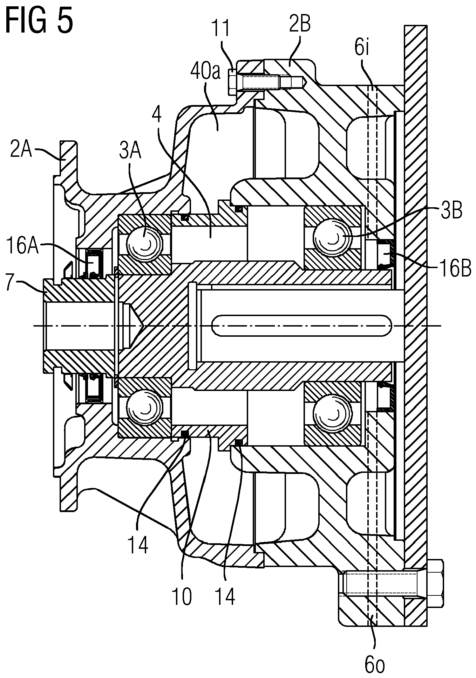

Fig. 5 zeigt einen Schnitt einer Adapterbaugruppe in kurzer Bauweise in einer Ausführung für längere Wartungsintervalle. Für diese Ausführung sind in der Adapterbaugruppe Kugellager 3A, 3B ohne Deckscheiben eingebaut. Der Schmierstoffraum 4 für die Schmierstoffaufnahme ist durch den Einbau eines Zwischenringes 10 und von O-Ringen 14 gegenüber einem radial weiter außen liegenden Schmierstoffraum 40a abgetrennt, in welchem sich kein Schmierstoff befindet. In dem motorseitigen Adapter 2B sind Bohrungen 6 für die Schmierstoffzufuhr in bzw. den Schmierstoffablauf aus dem Schmierstoffraum 4 für die Schmierstoffaufnahme eingebracht.

Das getriebeseitige Lager 3A ist fixiert und somit als Festlager ausgebildet. Das motorseitige Lager 3B ist ein Loslager. Der Zwischenring 10 liegt mit einer getriebeseitigen Stirnfläche an dem getriebeseitigen Lager 3A und mit einer an seinem motorseitigen Ende angeordneten, vom Außenumfang des Rings 10 abstehenden Rippe an dem motorseitigen Adapter 2B an. Der Zwischenring 10 weist an seinem Außenumfang zwei Nuten mit eingelegten O-Ringen auf, nämlich eine Nut gegenüber einer Ringfläche des getriebeseitigen Adapters 2A und eine Nut gegenüber einer Ringfläche des motorseitigen Adapters 2A, durch welche eine Schmierstoffabdichtung des Schmierstoffraums 4 gegenüber dem radial weiter außen liegenden Hohlraum 40a ausgebildet ist.

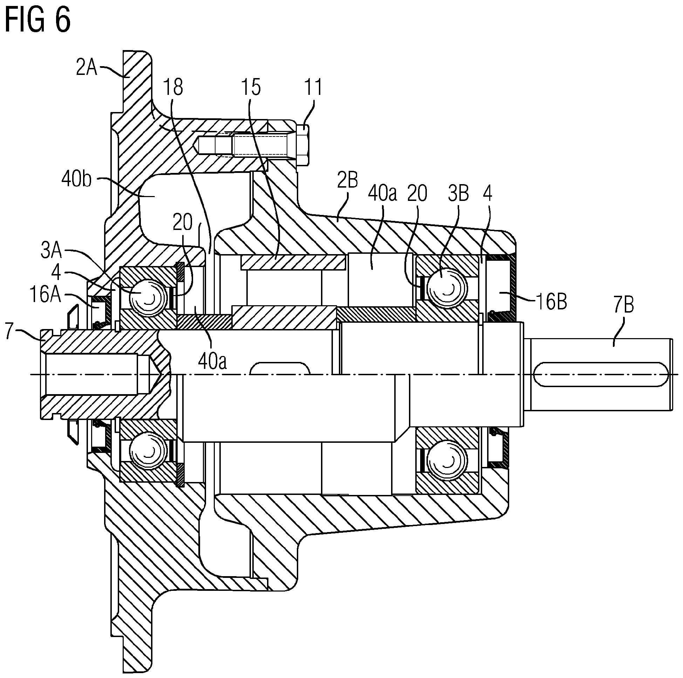

Fig. 6 zeigt einen Schnitt einer Adapterbaugruppe mit einem freien Wellenende 7B der Adapterwelle 7. Dargestellt ist in der oberen Hälfte der Zeichnung der Einbau einer Rücklaufsperre 15. Außerdem ist die unterschiedliche Ausführung der motorseitigen Abdichtung durch einen Wellendichtring 16 dargestellt.

Die Lager 3A, 3B weisen an den zueinander liegenden Seiten jeweils Deckscheiben 20 auf, sind aber auf den jeweils äußeren Seiten ohne Deckscheibe ausgebildet, d.h. offen.

An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet die Adapterbaugruppe zum Getriebe hin ab. Der motorseitige Wellendichtring 16B dichtet die Adapterbaugruppe zur Umgebung ab.

Es wird jeweils der Schmierstoffraum 4 zwischen dem getriebeseitigen Lager 3A und dem getriebeseitigen Wellendichtring 16A bzw. dem motorseitigen Lager 3B und dem motorseitigen Wellendichtring 16B mit einer bestimmten Menge Fett zur Schmierung der Lager 3A, 3B gefüllt. Zwischen den Lagern 3A, 3B befindet sich rings um die Adapterwelle 7 ein Hohlraum 40a, in welchem sich kein Schmierstoff befindet. Dieser Hohlraum 40a ist über einen Spalt 18 mit einem zweiten Hohlraum 40b verbunden, in welchem sich ebenfalls kein Schmierstoff befindet.

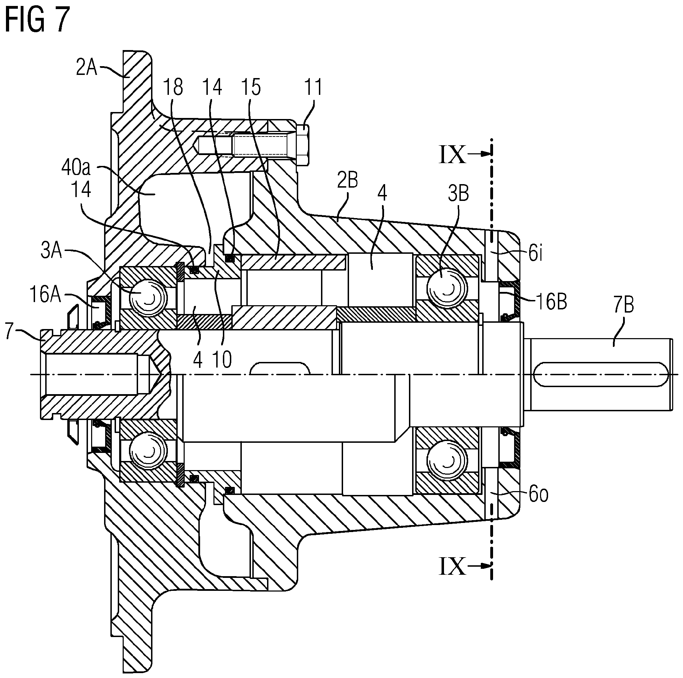

Fig. 7 zeigt einen Schnitt einer Adapterbaugruppe mit einem freien Wellenende 7B der Adapterwelle 7, ähnlich zu der in Fig. 6 dargestellten Adapterbaugruppe, aber in einer Ausführung für längere Wartungsintervalle. Dargestellt ist in der oberen Hälfte der Fig. 7 der Einbau einer auf die Adapterwelle 7 wirkenden Rücklaufsperre 15, in der unteren Hälfte ist die Adapterbaugruppe ohne eine Rücklaufsperre dargestellt. Außerdem ist die motorseitige und getriebeseitige Abdichtung des Schmierstoffraums 4 für die Schmierstoffaufnahme durch Wellendichtringe 16A und 16B dargestellt, welche somit die axialen Begrenzungen des Schmierstoffraums 4 für die Schmierstoffaufnahme bilden. In beiden Varianten (in der oberen bzw. unteren Hälfte) sind die nach beiden Seiten hin offenen Lager 3A, 3B in den jeweiligen Endabschnitten des Schmierstoffraums 4 für die Schmierstoffaufnahme angeordnet.

In der oberen und unteren Hälfte der Fig. 7 ist der ringförmige Schmierstoffraum 4 für die Schmierstoffaufnahme radial innen durch die Adapterwelle 7 begrenzt. Radial außen ist der Schmierstoffraum 4 durch einen die Adapterwelle 7 umgebenden und an den Adaptern 2A, 2B anliegenden Zwischenring 10 begrenzt, wobei der Zwischenring 10 zwischen einem Lageraußenring des getriebeseitigen Lagers 3A und dem Bund des motorseitigen Adapters 2B sitzt. Zur Abdichtung des Zwischenrings 10 gegen die Adapter 2A, 2B ist zwischen dem Zwischenring 10 und jeweils einem Adapter 2A, 2B ein O-Ring 14 eingesetzt.

In beiden Varianten ist radial außerhalb des Zwischenrings 10 ein Hohlraum 40a gebildet, in welchem sich kein Schmierstoff befindet. In dem motorseitigen Adapter 2B sind zwei Bohrungen 6i und 60 ausgebildet, je eine für die Schmierstoffzufuhr zu und den Schmierstoffablauf aus dem Schmierstoffraum 4 für die Schmierstoffaufnahme.

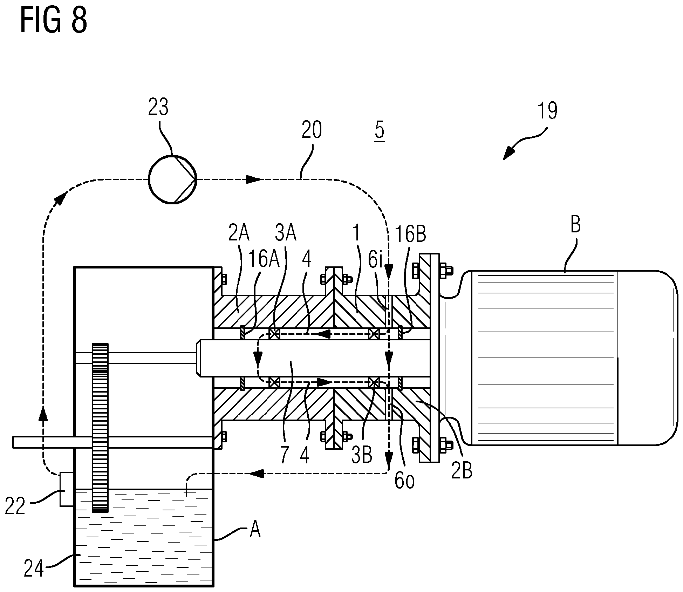

Fig. 8 zeigt eine teilweise als Schnitt dargestellte Seitenansicht einer Antriebsgruppe 19, umfassend eine Getriebeeinheit A, eine Motoreinheit B und eine zwischen dem Getriebe A und dem Motor B angeordnete Adapterbaugruppe 1 zur Kopplung von Motor B und Getriebe A. Die Adapterbaugruppe 1 umfasst zwei miteinander verbundene Adapter 2A, 2B, entlang deren koaxialen Längsachse eine in einem getriebeseitigen Lager 3A und einem motorseitigen Lager 3B angeordnete Adapterwelle 7 drehbar gelagert ist. Auf der Getriebeseite des getriebeseitigen Lagers 3A ist die Adapterwelle 7 mittels eines Wellendichtrings 16A gegen einen Durchtritt von Schmiermittel abgedichtet. Analog erfolgt eine motorseitige Abdichtung durch einen motorseitigen Wellendichtring 16B. Zwischen den beiden Wellendichtringen 16A, 16B ist somit ein die Adapterwelle 7 ringförmig umgebender Schmierstoffraum 4 gebildet, innerhalb dessen das getriebeseitige Lager 3A und das motorseitige Lager 3B angeordnet sind.

In dem motorseitigen Adapter 2B ist ein Einlasskanal 6i zur Zuführung von Schmierstoff von einem Außenraum 5 der Antriebsgruppe 19 zu dem Schmierstoffraum 4 ausgebildet, wobei der Einlasskanal 6i zwischen dem motorseitigen Wellendichtring 16B und dem motorseitigen Lager 3B in den Schmierstoffraum 4 mündet. Ebenfalls in dem motorseitigen Adapter 2B ist ein Auslasskanal 60 zur Abführung von Schmierstoff von dem Schmierstoffraum 4 zu dem Außenraum 5 der Antriebsgruppe 19 ausgebildet. Der Auslasskanal 60 geht zwischen dem motorseitigen Wellendichtring 16B und dem motorseitigen Lager 3B von dem Schmierstoffraum 4 ab und mündet an der Außenseite des Gehäuses des motorseitigen Adapters 2B.

Über den Auslasskanal 60 wird Schmieröl von dem zur Aufnahme von Schmierstoff dienenden Schmierstoffraum 4, welcher die Adapterwelle 7 umgibt und mit den Lagern 3A, 3B in Verbindung steht, abgeführt und über eine außerhalb der Adapterbaugruppe 1 verlaufende Ölleitung in die Getriebeeinheit A abgeleitet. Dort sammelt sich das Öl in einem Ölsumpf 24, gelangt von dort, z.B. mittels Spritzschmierung, zu einem Ölauslass in der Gehäusewand des Getriebegehäuses und von dort zu einem Ölfilter 22. Über eine externe Ölleitung 20, in der das Öl Wärme an die Umgebung abgeben kann, wird das Öl von dem Ölfilter 22 außenseitig der Antriebsgruppe 19 zu dem Einlasskanal 6i gefördert, beispielsweise mittels einer vorzugsweise von einer Getriebewelle angetriebenen Ölpumpe 23. Über den Einlasskanal 6i gelangt das gefilterte und gekühlte Öl erneut in den Schmierstoffraum 4.

Auf diese Weise ist eine Umlaufschmierung realisierbar, die vorzugsweise in einen Schmierstoffversorgungskreislauf der Getriebeeinheit A integrierbar ist. Der Begriff Umlaufschmierung bezeichnet dabei einen Schmierstoffkreislauf mit einem Reservoir, z.B. einer Ölwanne oder einem Ölsumpf 24 in der Getriebeeinheit A, einer Schmierstoffzuführung, z.B. durch dem Einlasskanal 6i, zu den Schmierstellen der Adapterbaugruppe 1, insbesondere den Lagern 3A und 3B der Adapterwelle 7, und einer Rückführung des Schmierstoffs zu dem Reservoir, z.B. der Ableitung von Schmierstoff aus der Kupplungsadapterbaugruppe 1 über den Ablasskanal 60.

Alternativ zu dem in Fig. 8 dargestellten Ausführungsbeispiel kann einer der beiden Kanäle 6i, 60 in dem motorseitigen Adapter 2B und der andere der beiden Kanäle 6i, 60 in dem getriebeseitigen Adapter 2A angeordnet sein; z.B. kann der Auslasskanal 60 in dem getriebeseitigen Adapter 2A angeordnet sein und direkt in das Getriebe A münden. Analog sind auch alle anderen denkbaren Anordnungen der Kanäle in den getriebeseitigen und motorseitigen Adaptern 2A, 2B möglich.

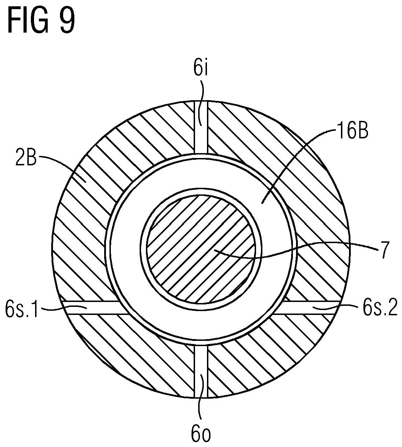

Fig. 9 zeigt einen quer zur Wellenachse verlaufenden Schnitt IX-IX durch den in Fig. 7 dargestellten motorseitigen Adapter. Der motorseitige Adapter weist vier Kanäle auf. Ein erster, vertikaler Kanal 6i durchdringt oberhalb der Welle 7 die Gehäusewand und dient als ein Einlasskanal zur Zuführung von Schmierstoff zu dem Schmierstoffraum. Ein zweiter, vertikaler Kanal 60 durchdringt unterhalb der Welle 7 die Gehäusewand dient als ein Ablasskanal zur Entnahme von Schmierstoff aus dem Schmierstoffraum. Ein dritter und vierter Kanal 6s.1 und 6s.2 durchdringt die Gehäusewand jeweils waagrecht; diese beiden waagrechten Kanäle 6s.1 und 6s.2 dienen als Einstellkanäle zum Einstellen eines definierten Ölstands im Schmierstoffraum. Dabei erfolgt eine Einstellung eines definierten Ölstands in der Adapterbaugruppe, indem überschüssiges Öl durch die Einstellkanäle 6s.1 und 6s.2 aus dem Schmierstoffraum abgeführt wird. Dabei sind die Einstellkanäle 6s.1 und 6s.2 so angeordnet, dass im Schmierstoffraum stets eine vorgegebene Ölmenge verbleibt, d.h. ein definierter Ölstand sichergestellt ist. Dazu liegen die Mündungen der Einstellkanäle 6s.1 und 6s.2 im Schmierstoffraum so hoch, dass bei verschlossenem Ablasskanal 60 der Ölpegel ungefähr in Höhe der Unterkante der Adapterwelle liegt.

## Patentansprüche

1. Adapterbaugruppe (1) zur Verbindung einer Getriebeeinheit (A) und einer Motoreinheit (B), umfassend
- einen getriebeseitigen Adapter (2A) mit einem getriebeseitigen Lager (3A),
- einen mit dem getriebeseitigen Adapter (2A) verbundenen motorseitigen Adapter (2B) mit einem motorseitigen Lager (3B),
- eine drehbar in den Lagern (3A, 3B) gelagerte Adapterwelle (7) und
- mindestens einen sich ringförmig um die Adapterwelle (7) erstreckenden Schmierstoffraum (4) zur Aufnahme von Schmierstoff,
wobei der Schmierstoffraum (4) mit dem getriebeseitigen Lager (3A) und/oder dem motorseitigen Lager (3B) in Verbindung steht, so dass der Schmierstoff von dem Schmierstoffraum (4) dem getriebeseitigen Lager (3A) bzw. dem motorseitigen Lager (3B) zuführbar ist,
wobei auf der Getriebeseite des getriebeseitigen Lagers (3A) und auf der Motorseite des motorseitigen Lagers (3B) jeweils eine die Adapterwelle (7) umgebende Schmierstoffdichtung (16A, 16B) zur Abdichtung des Schmierstoffraums (4) angeordnet ist, **gekennzeichnet durch** mindestens einen Kanal (6i), **durch** welchen Schmierstoff von der Umgebung (5) der Adapterbaugruppe (1) dem Schmierstoffraum (4) zuführbar ist und/oder **durch** mindestens einen Kanal (60), **durch** welchen Schmierstoff von dem Schmierstoffraum (4) entnehmbar ist, wobei der Kanal bzw. die Kanäle (6i, 60) ausschließlich **durch** den motorseitigen Adapter (2B) verlaufen.

2. Adapterbaugruppe (1) nach Anspruch 1, wobei der Schmierstoffraum (4) durch einen Ring (9, 10), welcher sich zwischen dem getriebeseitigen Lager (3A) und dem motorseitigen Lager (3B) erstreckt, von einem radial weiter außen liegenden Hohlraum (40a) getrennt ist.

3. Adapterbaugruppe (1) nach Anspruch 2, wobei der Ring (9, 10) durch eine Auskragung (9) des motorseitigen und/oder getriebeseitigen Adapters (2A, 2B) oder einen Zwischenring (10), der zwischen die Lager (3A, 3B) eingesetzt ist, gebildet ist.

4. Adapterbaugruppe (1) nach einem der vorhergehenden Ansprüche, wobei die Schmierstoffdichtungen (16A, 16B) Wellendichtringe sind.

5. Adapterbaugruppe (1) nach einem der vorhegehenden Ansprüche, wobei ein Ende des Kanals bzw. der Kanäle (6i, 60) am motorseitigen Lager (3B) endet.

6. Adapterbaugruppe (1) nach einem der Ansprüche vorhegehenden, **gekennzeichnet durch** mindestens drei Kanäle (6i, 60, 6s.1, 6s.2), wobei ein erster Kanal (6i) der mindestens drei Kanäle (6i, 6o, 6s.1, 6s.2) ein Einlasskanal zur Zuführung von Schmierstoff zu dem Schmierstoffraum (4), ein zweiter Kanal (6o) der mindestens drei Kanäle (6i, 6o, 6s.1, 6s.2) ein Ablasskanal zur Entnahme von Schmierstoff aus dem Schmierstoffraum (4) und ein dritter Kanal (6s.1, 6s.2) der mindestens drei Kanäle (6i, 6o, 6s.1, 6s.2) ein Einstellkanal zum Einstellen eines definierten Ölstands im Schmierstoffraum (4) ist.

7. Adapterbaugruppe (1) nach einem der vorhergehenden Ansprüche, wobei die Adapterbaugruppe (1) ein Adapter für IEC-, NEMA- und Servo-Motoren ist.

8. Antriebsgruppe (19), umfassend eine Adapterbaugruppe (1) nach einem der vorhergehenden Ansprüche und eine Getriebeeinheit (A) und/oder eine Motoreinheit (B), die mit der Adapterbaugruppe (1) verbunden ist bzw. sind.

9. Baukastensystem zum Ausbilden einer Adapterbaugruppe (1) nach einem der Ansprüche 1 bis 7, umfassend mehrere, zum Verbinden mit unterschiedlichen Getriebeeinheiten (A) geeignete, getriebeseitige Adapter (2A) mit je einem getriebeseitigen Lager (3A), mehrere jeweils mit mindestens einem der getriebeseitigen Adapter (2A) verbindbare, zum Verbinden mit unterschiedlichen Motoreinheiten (B) geeignete, motorseitige Adapter (2B) mit je einem motorseitigen Lager (3B), und Adapterwellen (7) zur jeweiligen drehbaren Lagerung in den Lagern (3A, 3B).

10. Verfahren zur Herstellung einer Adapterbaugruppe (1) zur Verbindung einer Getriebeeinheit (A) und einer Motoreinheit (B), umfassend folgende Schritte:
Bereitstellen eines getriebeseitigen Adapters (2A) mit einem getriebeseitigen Lager (3A) und eines motorseitigen Adapters (2B) mit einem motorseitigen Lager (3B);
Verbinden des getriebeseitigen Adapters (2A) und des motorseitigen Adapters (2B);
Montieren einer Adapterwelle (7) in den Lagern (3A, 3B), so dass die Adapterwelle (7) drehbar in den Lagern (3A, 3B) gelagert ist;
Ausbilden mindestens eines sich ringförmig um die Adapterwelle (7) erstreckenden Schmierstoffraums (4) zur Aufnahme von Schmierstoff, wobei der Schmierstoffraum (4) mit dem getriebeseitigen Lager (3A) und/oder dem motorseitigen Lager (3B) in Verbindung steht, so dass der Schmierstoff von dem Schmierstoffraum (4) dem getriebeseitigen Lager (3A) bzw. dem motorseitigen Lager (3B) zuführbar ist;
Anordnen jeweils einer die Adapterwelle (7) umgebenden Schmierstoffdichtung (16B) zur Abdichtung des Schmierstoffraums (4) auf der Getriebeseite des getriebeseitigen Lagers (3A) und auf der Motorseite des motorseitigen Lagers (3B)
**gekennzeichnet durch** folgenden weiteren Schritt:
Ausbilden mindestens eines Kanals (6i), **durch** welchen Schmierstoff von der Umgebung (5) der Adapterbaugruppe (1) dem Schmierstoffraum (4) zuführbar ist und/oder Ausbilden mindestens eines Kanals (6o), **durch** welchen Schmierstoff von dem Schmierstoffraum (4) abführbar ist,
wobei der mindestens eine Kanal (6) in dem motorseitigen Adapter (2B) ausgebildet wird.

## Claims

1. Adapter assembly (1) for connecting a transmission unit (A) to a motor unit (B), comprising
- a transmission-side adapter (2A) with a transmission-side bearing (3A),
- a motor-side adapter (2B) with a motor-side bearing (3B), said motor-side adapter (2B) being connected to the transmission-side adapter (2A),
- an adapter shaft (7) which is rotatably supported in the bearings (3A, 3B), and
- at least one lubricant chamber (4) which extends annularly around the adapter shaft (7) and is provided for the purpose of holding lubricant,
wherein the lubricant chamber (4) is connected to the transmission-side bearing (3A) and/or the motor-side bearing (3B) such that the lubricant can be supplied from the lubricant chamber (4) to the transmission-side bearing (3A) and/or the motor-side bearing (3B) respectively,
wherein a lubricant seal (16A, 16B) surrounding the adapter shaft (7) is arranged in each case on the transmission side of the transmission-side bearing (3A) and on the motor side of the motor-side bearing (3B) for the purpose of sealing the lubricant chamber (4), **characterised by** at least one channel (6i) via which lubricant can be supplied from the surroundings (5) of the adapter assembly (1) to the lubricant chamber (4), and/or by at least one channel (6o) via which lubricant can be discharged from the lubricant chamber (4), wherein the channel or channels (6i, 6o) run through only the motor-side adapter (2B).

2. Adapter assembly (1) according to claim 1, wherein the lubricant chamber (4) is separated from a hollow space (40a), which is situated further out radially, by a ring (9, 10) that extends between the transmission-side bearing (3A) and the motor-side bearing (3B).

3. Adapter assembly (1) according to claim 2, wherein the ring (9, 10) is formed by a projection (9) of the motor-side and/or transmission-side adapter (2A, 3A) or by an intermediate ring (10) which is placed between the bearings (3a, 3B).

4. Adapter assembly (1) according to one of the preceding claims, wherein the lubricant seals (16A, 16B) are shaft sealing rings.

5. Adapter assembly (1) according to one of the preceding claims, wherein one end of the channel or channels (6i, 6o) terminates at the motor-side bearing (3B).

6. Adapter assembly (1) according to one of the preceding claims, **characterised by** at least three channels (6i, 6o, 6s.1, 6s.2), wherein a first channel (6i) of the at least three channels (6i, 6o, 6s.1, 6s.2) is an inlet channel for supplying lubricant to the lubricant chamber (4), a second channel (6o) of the at least three channels (6i, 6o, 6s.1, 6s.2) is an outlet channel for discharging lubricant from the lubricant chamber (4), and a third channel (6s.1, 6s.2) of the at least three channels (6i, 6o, 6s.1, 6s.2) is a setting channel for setting a defined oil level in the lubricant chamber (4).

7. Adapter assembly (1) according to one of the preceding claims, wherein the adapter assembly (1) is an adapter for IEC motors, NEMA motors and servomotors.

8. Drive group (19) comprising an adapter assembly (1) according to one of the preceding claims and a transmission unit (A) and/or a motor unit (B) which is/are connected to the adapter assembly (1).

9. Modular system for producing an adapter assembly (1) according to one of the claims 1 to 7, comprising a plurality of transmission-side adapters (2A) which are suitable for connecting to different transmission units (A) and each have a transmission-side bearing (3A), a plurality of motor-side adapters (2B) which can be connected to at least one of the transmission-side adapters (2A) in each case and are suitable for connecting to different motor units (B) and each have a motor-side bearing (3B), and adapter shafts (7) which are rotatably supported in the respective bearings (3A, 3B).

10. Method for manufacturing an adapter assembly (1) for connecting a transmission unit (A) to a motor unit (B), comprising steps as follows:
providing a transmission-side adapter (2A) with a transmission-side bearing (3A) and a motor-side adapter (2B) with a motor-side bearing (3B);
connecting the transmission-side adapter (2A) to the motor-side adapter (2B);
mounting an adapter shaft (7) in the bearings (3A, 3B) such that the adapter shaft (7) is rotatably supported in the bearings (3A, 3B);
forming at least one lubricant chamber (4) for holding lubricant, said lubricant chamber (4) extending annularly around the adapter shaft (7) and being connected to the transmission-side bearing (3A) and/or the motor-side bearing (3B) such that the lubricant can be supplied from the lubricant chamber (4) to the transmission-side bearing (3A) and/or the motor-side bearing respectively (3B);
arranging a lubricant seal (16B), which surrounds the adapter shaft (7), on both the transmission side of the transmission-side bearing (3A) and on the motor side of the motor-side bearing (3B), for the purpose of sealing the lubricant chamber (4),
**characterised by** a further step as follows:
forming at least one channel (6i) via which lubricant can be supplied to the lubricant chamber (4) from the surroundings (5) of the adapter assembly (1), and/or forming at least one channel (6o) via which lubricant can be drained from the lubricant chamber (4), wherein the at least one channel (6) is formed in the motor-side adapter (2B).

## Revendications

1. Module (1) d'adaptateur pour relier un groupe (A) de transmission et un groupe (B) moteur, comprenant
- un adaptateur (2A) du côté de la transmission, ayant un palier (3A) du côté de la transmission,
- un adaptateur (2B) du côté du moteur, relié à l'adaptateur (2A) du côté de la transmission et ayant un palier (3B) du côté du moteur,
- un arbre (7) d'adaptateur, monté tournant dans les paliers (3A, 3B) et
- au moins un espace (4) pour du lubrifiant, s'étendant annulairement autour de l'arbre (7) de l'adaptateur et destiné à recevoir du lubrifiant,
dans lequel l'espace (4) pour du lubrifiant est en liaison avec le palier (3A) du côté de la transmission et/ou avec le palier (3B) du côté du moteur, de manière à pouvoir envoyer le lubrifiant de l'espace (4) pour du lubrifiant au palier (3A) du côté de la transmission ou au palier (3B) du côté du moteur,
dans lequel il est monté, du côté de la transmission du palier (3A) du côté de la transmission et du côté du moteur du palier (3B) du côté du moteur, respectivement une étanchéité (16A, 16B) au lubrifiant, entourant l'arbre (7) de l'adaptateur et destinée à rendre étanche l'espace (4) pour du lubrifiant,
**caractérisé par** au moins un conduit (6i), par lequel du lubrifiant peut être envoyé de l'entourage (5) du module (1) d'adaptateur à l'espace (4) pour du lubrifiant et/ou par au moins un conduit (6o), par lequel du lubrifiant peut être prélevé de l'espace (4) pour du lubrifiant, le conduit ou les conduits (6i, 6o) s'étendant exclusivement dans l'adaptateur (2B) du côté du moteur.

2. Module (1) d'adaptateur suivant la revendication 1, dans lequel l'espace (4) pour du lubrifiant est séparé d'un espace (40a) vide, se trouvant radialement plus à l'extérieur, par un anneau (9, 10), qui s'étend entre le palier (3A) du côté de la transmission et le palier (3B) du côté du moteur.

3. Module (1) d'adaptateur suivant la revendication 2, dans lequel l'anneau (9, 10) est formé par une saillie (9) de l'adaptateur (2A, 2B) du côté du moteur et/ou du côté de la transmission, ou par un anneau (10) intermédiaire, inséré entre les paliers (3A, 3B).

4. Module (1) d'adaptateur suivant l'une des revendications précédentes, dans lequel les étanchéités (16A, 16B) au lubrifiant sont des bagues d'étanchéité d'arbre.

5. Module (1) d'adaptateur suivant l'une des revendications précédentes, dans lequel une extrémité du conduit ou des conduits (6i, 6o) se termine au palier (3B) du côté du moteur.

6. Module (1) d'adaptateur suivant l'une des revendications précédentes, **caractérisé par** au moins trois conduits (6i, 60, 6s.1, 6s.2), un premier conduit (6i), parmi les au moins trois conduits (6i, 6o, 6s.1, 6s.2), étant un conduit d'entrée pour apporter du lubrifiant à l'espace (4) pour du lubrifiant, un deuxième conduit (6o), parmi les au moins trois conduits (6i, 60, 6s.1, 6s.2), étant un conduit de sortie pour prélever du lubrifiant de l'espace (4) pour du lubrifiant et un troisième conduit (6s.1, 6s.2), parmi les au moins trois conduits (6i, 60, 6s.1, 6s.2), étant un conduit de réglage pour régler un niveau d'huile défini dans l'espace (4) pour du lubrifiant.

7. Module (1) d'adaptateur suivant l'une des revendications précédentes, dans lequel le module (1) d'adaptateur est un adaptateur pour des moteurs IEC, des moteurs NEMA et des servo-moteurs.

8. Groupe (19) d'entraînement comprenant un module (1) d'adaptateur suivant l'une des revendications précédentes et un groupe (A) de transmission et/ou un groupe (B) moteur, qui est ou sont reliés au module (1) d'adaptateur.

9. Système modulaire de constitution d'un module (1) d'adaptateur suivant l'une des revendications 1 à 7, comprenant plusieurs adaptateurs (2A) du côté de la transmission, appropriés à se relier à des groupes (A) de transmission différents et ayant chacun un palier (3A) du côté de la transmission, plusieurs adaptateurs (2B) du côté du moteur, pouvant être reliés à au moins l'un des adaptateurs (2A) du côté de la transmission, propres à se relier à des groupes (B) moteur différents et ayant chacun un palier (3B) du côté du moteur, et des arbres (7) d'adaptateur à monter tournant respectivement dans les paliers (3A, 3B).

10. Procédé de fabrication d'un module (1) d'adaptateur pour relier un groupe (A) de transmission et un groupe (B) moteur, comprenant les stades suivantes :
on se procure un adaptateur (2A) du côté de la transmission, ayant un palier (3A) du côté de la transmission, et un adaptateur (2B) du côté du moteur, ayant un palier (3B) du côté du moteur ;
on relie l'adaptateur (2A) du côté de la transmission et l'adaptateur (2B) du côté du moteur ;
on monte un arbre (7) d'adaptateur dans les paliers (3A, 3B), de manière à ce que l'arbre (7) d'adaptateur soit monté tournant dans les paliers (3A, 3B) ;
on constitue au moins un espace (4) pour du lubrifiant, qui s'étend annulairement autour de l'arbre (7) de l'adaptateur et qui est destiné à recevoir du lubrifiant, l'espace (4) pour du lubrifiant étant en liaison avec le palier (3A) du côté de la transmission et/ou le palier (3B) du côté du moteur, de manière à pouvoir apporter le lubrifiant de l'espace (4) pour du lubrifiant au palier (3A) du côté de la transmission ou au palier (3B) du côté du moteur ;
on met respectivement une étanchéité (16B) au lubrifiant entourant l'arbre (7) de l'adaptateur, pour rendre étanche l'espace (4) pour du lubrifiant, du côté de la transmission du palier (3A) du côté de la transmission et du côté du moteur du palier (3B) du côté du moteur ;
**caractérisé par** le stade supplémentaire suivant :
on constitue au moins un conduit (6i), par lequel du lubrifiant peut être apporté de l'entourage (5) du module (1) de l'adaptateur à l'espace (4) pour du lubrifiant et/ou on constitue au moins un conduit (6o), par lequel du lubrifiant peut être évacué de l'espace (4) pour du lubrifiant,
dans lequel on constitue le au moins un conduit (6) dans l'adaptateur (2B) du côté du moteur.
